# EUROPÄISCHE PATENTSCHRIFT

(11) **EP 1 812 486 B1**
(45) Veröffentlichungstag und Bekanntmachung des Hinweises auf die Patenterteilung: **03.03.2010**
(21) Anmeldenummer: 05801628.8
(22) Anmeldetag: 05.11.2005
(51) Int. Cl.: C08G 2/28, C08G 2/30, C08K 5/17

(54) **BASISCHE DESAKTIVATOREN BEI DER POM-HERSTELLUNG**
BASIC DEACTIVATORS FOR POM PRODUCTION
DESACTIVATEURS BASIQUES LORS DE LA PRODUCTION DE POM

(30) Priorität: 11.11.2004 DE 102004054629
(43) Veröffentlichungstag der Anmeldung: 01.08.2007
(73) Patentinhaber: BASF SE, 67056 Ludwigshafen (DE)
(72) Erfinder: ASSMANN, Jens, 68165 Mannheim (DE); ZÖLLNER, Knut, 68165 Mannheim (DE)
(86) Internationale Anmeldenummer: PCT/EP2005/011847
(87) Internationale Veröffentlichungsnummer: WO 2006/050869

(56) Entgegenhaltungen:
- EP-A- 0 244 245
- EP-A- 0 279 289
- WO-A-01/04171
- US-A- 3 904 581
- US-A- 5 726 276

## Beschreibung

Die Erfindung betrifft ein verbessertes Verfahren zur Herstellung von Polyoxymethylenen.

Es ist bekannt, dass Oxymethylenpolymere durch kontinuierliche Massepolymerisation der Monomeren in Gegenwart kationisch wirkender Initiatoren hergestellt werden können. Diese Polymerisation wird häufig in Knetern oder Extrudern oder Rohrreaktoren durchgeführt. Dabei kann die Temperaturführung so erfolgen, dass das entstehende Oxymethylenpolymer entweder in fester Form (DE-A 1 161 421, DE-A 1 495 228, DE-A 1 720 358, DE-A 3 018 898) oder auch als Schmelze (DE-A 3 147 309) anfällt. Die Aufarbeitung des in fester Form anfallenden Polymers ist bekannt, siehe: DE-A 31 47 309, DE-A 36 28 561, EP-A 678 535, EP-A 699 965 und DE-A 44 23 617.

Bei der Massepolymerisation sind unterschiedliche Verfahrensvarianten Stand der Technik, darunter die Batch-Polymerisation in Schalen, die kontinuierliche Polymerisation in Kneter-Reaktoren bei Temperaturen unterhalb des Schmelzpunktes oder die Polymerisation bei Temperaturen oberhalb des Schmelzpunktes von Trioxan im Extruder (siehe WO 01/58974).

Die Herstellung mittels Suspensions- oder Fällungspolymerisation mit kationischen Initiatoren ist generell bekannt. In dem hierbei verwendeten Lösungsmittel soll insbesondere das entstehende Polymerisat nicht löslich sein, damit dieses leichter abtrennbar ist.

Sowohl bei Masse- als auch Fällungspolymerisation werden Abbruchmittel, sog. Desaktivatoren zugegeben, um die Polymerisation zu beenden.
Gemäß DE-A 36 17 754, DE-A 25 09 924, JP-A 59/197 415, WO 97/24384 und Res. Discl. Vol 190, Seite 61 (1980) können hierzu basische Verbindungen wie Amine und anorganische/organische Basen jeglicher Art eingesetzt werden.

Aus der EP-A 244 245 sind Piperidinderivate und aus der US 3,904,581 4-Aminopiperidinderivate bekannt.

Die aus dem Stand der Technik bekannten Desaktivatoren verursachen Probleme bei der Aufarbeitung der Reaktionsmischung und gegebenenfalls deren Rückführung in die Polymerisation. Meist werden Träger oder Lösungsmittel zugesetzt, um die sehr geringe benötigte Menge an Desaktivatoren effektiv im Polymerisat zu verteilen. Die Effektivität der Desaktivierung ist entscheidend für die Stabilisierung des Polymeren und lässt bei den bekannten Desaktivatoren noch zu wünschen übrig.

Aufgabe der vorliegenden Erfindung war es daher, ein verbessertes Verfahren zur Herstellung von Polyoxymethylen zur Verfügung zu stellen, welches folgende Vorteile gegenüber dem Stand der Technik aufweist:
- die kationischen Ladungen am Polymer werden stabilisiert und damit weitere Reaktionen im Polymer unterbunden,
- diese sollen mit Formiatendgruppen reagieren können und damit instabile Endgruppen des Polymers binden,
- als Formaldehydfänger und Radikalfänger dienen können,
- durch die multiplen Reaktionsmöglichkeiten sollte dieses Agenz vorwiegend polymergebunden vorliegen. In diesem Fall ergeben sich Vorteile bei der Aufarbeitung des Polymers, da z.B. keine flüchtigen organischen Monomere (i.e. nichtumgesetzte Base) abgetrennt werden müssen.

Demgemäß wurde ein Verfahren zur Herstellung von Polyoxymethylenen durch Polymerisation der Monomeren a) in Gegenwart kationisch wirkender Initiatoren b) sowie gegebenenfalls in Gegenwart von Reglern c) und anschließender Desaktivierung sowie Austragung aus dem Reaktor gefunden, welches dadurch gekennzeichnet ist, dass man als Desaktivator d) mindestens eine basische Verbindung mit mindestens 2 Aminofunktionen unterschiedlicher Reaktivität in einem Molekül gemäss Anspruch 1 vorliegender Anmeldung einsetzt.

Bevorzugte Ausführungsformen sind den Unteransprüchen zu entnehmen.

Das Verfahren kann grundsätzlich auf jeglichen Reaktoren mit hoher Mischwirkung durchgeführt werden, wie beispielsweise Schalen, Pflugscharmischern, Rohrreaktoren, statischen Mischern, List-Reaktoren, Kneter, Rührreaktoren, Extrudern und Bandreaktoren.

Die entstehenden POM-Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch die Polymerisation von Monomeren a) wie Formaldehyd oder Trioxan hergestellt, vorzugsweise in der Gegenwart von geeigneten Katalysatoren.

Im Rahmen der Erfindung werden Polyoxymethylencopolymere Bevorzugt, insbesondere solche, die neben den wiederkehrenden Einheiten -CH₂O- noch bis zu 50, vorzugsweise 0,01 bis 20, insbesondere 0,1 bis 10 mol-% und ganz besonders bevorzugt 0,5 bis 3 mol-% an wiederkehrenden Einheiten. 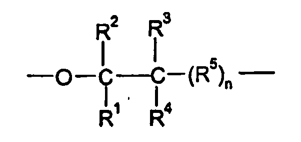 wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine - CH₂-, -CH₂O -, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen Ringöffnung von cyclischen Ethern in die Copolymere eingeführt werden. Bevorzugte cyclische Ether sind solche der Formel 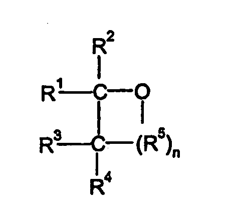 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo-oder Polyformale wie Polydioxolan oder Polydioxepan als Comonomere genannt

Ebenfalls geeignet sind Oxymethylenterpolymerisate, die beispielsweise durch Umsetzung von Trioxan bzw. einem der vorstehend beschriebenen cyclischen Ether mit einem dritten Monomeren, vorzugsweise bifunktionellen Verbindungen der Formel 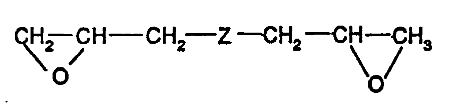 **und/oder** 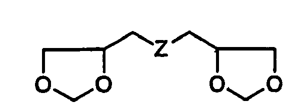 wobei Z eine chemische Bindung, -O-, -ORO- (R=C₁- bis C₈-Alkylen oder C₃- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Endgruppenstabilisierte Polyoxymethylenpolymerisate, die an den Kettenenden C-C- oder -O-CH₃-Bindungen aufweisen, werden besonders bevorzugt.

Die bevorzugten Polyoxymethylencopolymere haben Schmelzpunkte von mindestens 150°C und Molekulargewichte (Gewichtsmittelwert) M_{W} im Bereich von 5.000 bis 300.000, vorzugsweise von 7.000 bis 250.000.

Insbesondere bevorzugt sind POM-Copolymerisate mit einer Uneinheitlichkeit (M_{w}/Mₙ) von 2 bis 15, bevorzugt von 3 bis 12, besonders bevorzugt von 3,5 bis 8. Die Messungen erfolgen in der Regel über (GPC) SEC (size exclusion chromatography), der Mₙ-Wert (Zahlenmittel des Molekulargewichtes) wird im allgemeinen bestimmt mittels (GPC) SEC (size exclusion chromatography).

Besonders bevorzugte POM-Copolymerisate weisen eine bimodale Molekulargewichtsverteilung auf, wobei der niedermolekulare Anteil ein Molgewicht von 500 bis 20.000, vorzugsweise von 1.000 bis 15.000 aufweist und in Flächenanteilen von 1 bis 15, vorzugsweise 5 bis 10 % beim Verteilungsgraphen w(log M) gegen log M vorhanden ist.

Bevorzugt weisen die gemäß dem erfindungsgemäßen Verfahren erhältlichen Roh-Polyoxymethylene einen Restformaldehydgehalt gemäß VDA 275 im Granulat von maximal 3 %, bevorzugt maximal 1 %, vorzugsweise maximal 0,05 % auf.

Die mittlere Teilchengröße (d₅₀-Wert) (Korngröße) der POM-Polymerisate beträgt bevorzugt von 0,5 bis 20 mm, vorzugsweise von 0,75 bis 15 mm und insbesondere von 1 bis 7 mm.

Unter einem d₅₀-Wert versteht der Fachmann in der Regel den Teilchengrößenwert, bei welchem 50 % der Teilchen eine kleinere Teilchengröße aufweisen und 50 % eine größere Teilchengröße aufweisen. Dies ist entsprechend für die angegebenen d₁₀ und d₉₀-Werte zu verstehen.

Der d₁₀-Wert ist vorzugsweise kleiner 1 mm, insbesondere 0,75 mm und ganz besonders bevorzugt kleiner 0,5 mm.

Bevorzugte d₉₀-Werte sind kleiner 30 mm und insbesondere kleiner 20 mm und ganz besonders bevorzugt kleiner 10 mm.

Bestimmung der Korngrößenverteilung:
Die Korngrößenverteilung wurde anhand eines Standardsiebsatzes (Analysensiebe nach DIN 4188) in unterschiedliche Siebfraktionen aufgeteilt und diese ausgewogen. Beispielsweise d₅₀ = 1 mm bedeutet, dass 50 Gew.% der Probe eine Teilchengröße kleiner gleich 1 mm aufweist.

Das erfindungsgemäße Verfahren wird bevorzugt für die Homo- und die Copolymerisation von Trioxan angewandt. Als Monomeres a) kann aber grundsätzlich jegliches vorstehend beschriebene Monomere, beispielsweise auch Tetroxan oder (Para)Formaldehyd eingesetzt werden.

Die Monomeren, beispielsweise Trioxan, werden bevorzugt im geschmolzenen Zustand zudosiert, im allgemeinen bei Temperaturen von 60 bis 120°C.

Vorzugsweise beträgt die Temperatur der Reaktionsmischung bei der Dosierung 62 bis 114°C, insbesondere 70 bis 90°C.

Die Molekulargewichte des Polymeren können gegebenenfalls durch die bei der (Trioxan)polymerisation üblichen Regler c) auf die angestrebten Werte eingestellt werden. Als Regler c) kommen Acetale bzw. Formale einwertiger Alkohole, die Alkohole selbst sowie die als Kettenüberträger fungierenden geringen Mengen Wasser, deren Anwesenheit sich in der Regel nie vollständig vermeiden lässt, in Frage. Die Regler werden in Mengen von 10 bis 10.000 ppm, vorzugsweise von 100 bis 1.000 ppm, eingesetzt.

Als Initiatoren b) (auch als Katalysatoren bezeichnet) werden die bei der (Trioxan)polymerisation üblichen kationischen Starter verwendet. Es eignen sich Protonensäuren, wie fluorierte oder chlorierte Alkyl- und Arylsulfonsäuren, z.B. Perchlorsäure, Trifluormethansulfonsäure oder Lewis-Säuren, wie z.B. Zinntetrachlorid, Arsenpentafluorid, Phosphorsäurepentafluorid und Bortrifluorid sowie deren Komplexverbindungen und salzartige Verbindungen, z.B. Bortrifluorid-Etherate und Triphenylmethylenhexafluorophosphat. Die Katalysatoren (Initiatoren) werden in Mengen von etwa 0,001 bis 1.000 ppm, vorzugsweise 0,01 bis 100 ppm und insbesondere von 0,05 bis 10 ppm eingesetzt. Im allgemeinen empfiehlt es sich, den Katalysator in verdünnter Form zuzusetzen, vorzugsweise in Konzentrationen von 0,005 bis 5 Gew.%. Als Lösungsmittel hierfür können inerte Verbindungen wie aliphatische, cycloaliphatische Kohlenwasserstoffe z.B. Cyclohexan, halogenierte aliphatische Kohlenwasserstoffe, Glykolether usw. verwendet werden. Besonders bevorzugt ist Triglym als Lösungsmittel (Triethylenglykoldimethylether) und 1,4-Dioxan.

Monomere a), Initiatoren b), und gegebenenfalls Regler c) können auf beliebige Weise vorgemischt oder auch getrennt voneinander dem Polymerisationsreaktor zugegeben werden. Ferner können die Komponenten a), b) und/oder c) zur Stabilisierung sterische gehinderte Phenole enthalten wie in EP-A 129369 oder EP-A 128739 beschrieben.

Für eine größere Flexibilität beim gewünschten M_{w} des POM-Polymerisates hat es sich als vorteilhaft erwiesen den Regler c) in geringen Mengen Lösungsmittel zu lösen und anschließend mit den Monomeren bzw. Comonomeren zu mischen und zu dosieren.

In einer bevorzugten Ausführungsform wird die Polymerisation als Fällungspolymerisation (je nach Grad der Löslichkeit der einzelnen Komponenten auch als Suspensionspolymerisation bezeichenbar) in einem Lösungsmittel durchgeführt, in welchem das entstehende Polyoxymethylenhomo- oder -copolymerisat weitestgehend unlöslich ist. Unter "weitestgehend" unlöslich soll verstanden werden, dass ab einem Polymerisationsgrad von mindestens 4 das Polymerisat ausfällt.

Als Lösungsmittel werden insbesondere inerte Verbindungen eingesetzt, beispielsweise aliphatische Kohlenwasserstoffe wie Propan, Butan, Pentan, Iso-octan, n-Hexane, n-Heptan, n-Octan, iso-Octan sowie cycloaliphatische Kohlenwasserstoffe wie Cyclohexan oder Cycloheptan sowie Cyclopentan, welche gegebenenfalls Heteroatome als Substituenten tragen können.

Als aromatische Kohlenwasserstoffe sind solche geeignet welche mindestens 6 bis 30 C-Atome aufweisen, wobei Nitrobenzol, Toluol, Benzol bevorzugt sind.

Als weitere geeignete halogenierte Kohlenwasserstoffe seien Dichlormethan, Chloroform, Dichlorethan und Trichlorethan genannt.

Ferner sind Ether wie Dioxan oder THF sowie Triglym (Triethylenglykoldimethylether) als inerte Lösungsmittel geeignet.

Das Lösungsmittel weist bevorzugt zu Beginn der Reaktion (Zudosierung) Temperaturen von 50 bis 250°C vorzugsweise 55 bis 180 und insbesondere 60 bis 130°C auf.

Vorzugsweise wird vor Beginn der Reaktion unter Inertgasbedingungen, bevorzugt unter N₂, gearbeitet, bei Drücken von 1 bis 5, vorzugsweise von 1 bis 2 bar abs.

Die Verweilzeit für die Polymerisation im Lösungsmittel (Fällungspolymerisation) beträgt vorzugsweise 0,1 bis 240 min, insbesondere 5 bis 120 min. Die Polymerisation wird vorzugsweise bis zu einem Umsatz von mindestens 30 %, insbesondere mehr als 60 % geführt. Unter günstigen Bedingungen lassen sich auch Umsätze von 90 % und darüber erzielen, quantitative Umsätze bis zu 100 % sind gut reproduzierbar.

Im allgemeinen hat sich eine Fahrweise bewährt, bei der man einen Druck bei der Startphase der Polymerisation von 1 bar abs bis 10 bar abs, bevorzugt 2 bar abs bis 7 bar abs einstellt. Bevorzugt erfolgt die Polymerisation unter Inertgas, vorzugsweise Stickstoff.

In einer weiteren bevorzugten Ausführungsform wird die Polymerisation in Wasser bzw. einer Schmelze durchgeführt, wie diese beispielsvireise in der EP - A 0 080 656 und EP - A 0 638 599 beschrieben wird.

Vorzugsweise wird direkt anschließend an die Polymerisation die Polymerisationsmischung desaktiviert, vorzugsweise ohne dass eine Phasenveränderung erfolgt.

Die Desaktivierung der Katalysatorreste erfolgt in der Regel bei der Suspensionspolymerisation durch Zugabe von mindestens einem Desaktivator d):
a) durch direkte Zugabe in die Polymerisationsvorrichtung, vorzugsweise Kessel(kaskade), zum ausgefällten POM (in Teilchenform), oder
b) nach vollständiger Abtrennung des POM-Polymeren vom Lösungsmittel und anschließender Begasung mit gasförmigen Desaktivatoren, oder
c) nach teilweiser Abtrennung des Lösungsmittels und Zugabe des Desaktivators in das verbleibende Lösungsmittel, welches das ausgefällte Polymer enthält, oder
d) nach vollständiger Abtrennung des Polymeren vom Lösungsmittel und Auflösen des Polymeren in einem geeigneten Lösungsmittel sowie Zugabe des Desaktivators zum gelösten Polymeren.

Bei der bevorzugten Schmelzepolymerisation erfolgt in der Regel die Zugabe des Desaktivators
a) durch Zugabe der reinen Substanz oder einer Lösung oder Suspension in die Reaktionsschmelze,
b) durch Zugabe der Substanz, vorzugsweise per Seitenextruder oder Stopfschnecke in die Reaktionsschmelze.

Erfindungsgemäß verwendet man als Desaktivatoren (d) basische Verbindungen mit mindestens 2 Aminofunktionen unterschiedlicher Reaktivität in einem Molekül.

Unter unterschiedlicher Reaktivität im Sinne der Erfindung versteht man eine unter schiedliche Basizität der Stickstoffe und somit unterschiedlicher Affinität zum kationischen Zentrum am Polyacetal. Eine unterschiedliche Basizität ist in der Regel auf eine unterschiedliche molekulare Umgebung zurückzuführen (siehe auch Breitmaier/Jung, Organische Chemie, Thieme Verlag 1978, S. 374 und 375 und Beyer/Walter, Lehrbuch der organischen Chemie, Hirzel Verlag Stuttgart 1998, S. 166).

Entsprechend können Kombinationen von einer primären und einer sekundären oder primären und tertiären oder sekundären und tertiären Aminofunktionen oder deren Mischungen eingesetzt werden. Erfindungsgemäß sollen diese unterschiedlichen Aminofunktionen in einem Molekül vorhanden sein, wobei das Molgewicht vorzugsweise ≤400, insbesondere ≤200 gl mol beträgt.

Verbindungen d) sind solche der allgemeinen Formel I 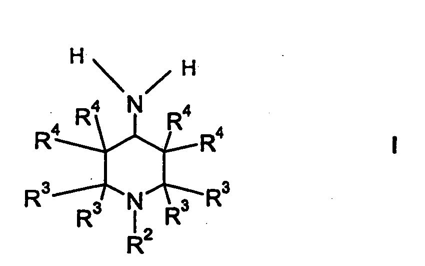 wobei R², R³ und R⁴ unabhängig voneinander Wasserstoff oder eine Methylgruppe bedeuten.

Triacetondiamin (4-Amino-2,2,6,6-Tetramethylpiperidin) ist bevorzugt.

Die Menge beträgt vorzugsweise von 0,001 bis 500 Gew ppm, vorzugsweise von 0,05 bis 100 und insbesondere von 0,5 bis 10 Gew ppm bezogen auf die Gesamtmasse. Das Verhältnis d) zu Initiator b) beträgt vorzugsweise 0,1 : 1 bis 50 : 1, insbesondere 0,5 : 1 bis 15 : 1 und ganz besonders 1 : 1 bis 10 : 1; bezogen auf die Stoffmenge des Initiators.

Die Desaktivatoren d) können auch mit bekannten anderen Abbruchmitteln gemischt werden.

Anschließend kann das entstandene Polymerisat mit inerten Lösungsmittel beispielsweise Aceton oder Cyclohexan gewaschen werden und mit geeigneten Vorrichtungen von Lösungsmittel abgetrennt, gegebenenfalls gekühlt werden.

Durch die erfindungsgemäße Fahrweise erhält man ein kompaktes, pulverförmiges Granulat, wobei die Entstehung von Grobanteilen gemäß des Standes der Technik vermieden wird.

Bei der Schmelzepolymerisation wird ein Polymer mit insbesondere verbesserter Stabilität erhalten.

Gemäß der erfindungsgemäßen Fahrweise erhält man Polyoxymethylenhomo- oder copolymerisate, welche 0,001 bis 100 Gew.ppm Einheiten enthalten, welche sich von mindestens einer basischen Verbindung d) mit mindesten 2 Aminofunktionen unterschiedlicher Reaktivität, insbesondere solche wie vorstehend unter der allgemeinen Formel aufgeführte Verbindungen, ableiten. Insbesondere weisen die Ketten 0,001 bis 30, vorzugsweise 0,01 bis 10 und insbesondere 0,1 bis 2 und ganz besonders bevorzugt 0,1 bis 1 % Einheiten auf, welche sich von den Desaktivatoren d) ableiten.

Bevorzugt befinden sich derartige Einheiten an den Polymerkettenenden. Anschließend kann das entsprechende Polyoxymethylenpolymerisat mit üblichen Additiven wie Stabilisatoren, Kautschuken, Füllstoffen usw. in üblicher Weise weiterverarbeitet werden.

### Beispiele

### Alle prozentualen Angaben sind Gewichtsprozente

### Beispiele 1-3

Eine Monomermischung bestehend aus 94 % Trioxan, 6 % Dioxolan und 0.-01 % Butylal wurde mit einem Volumenstrom von 1,5 l/h kontinuierlich in einen Polymerisationsreaktor (Rohrreaktor mit statischen Mischern, T = 175°C) dosiert. 1 ppm des Initiators wurde als Lösung (70 %ige, wässrige Perchlorsäure, 1 %ig gelöst in Triglyme) in den Monomerenstrom eingedüst, die Reaktionsmischung wurde in einem Rohrwendelreaktor mit stat. Mischern innig vermischt Nach einer Polymerisationsstrecke von 4 m wurde eine wässrige Lösung des Desaktivators d) (siehe Tabelle) 1 %ig in die Polymer schmelze injiziert, so dass das Abbruchmittel in zwanzigfachem StoffmengenGber schuss zum Initiator vorlag. Nach einer Verweilzeit von ca. 3 min wurde die Polymer schmelze ausgetragen.

Anschließend wurde die thermische Stabilität des Polymers in einer TGA-Messung (Thermogravimetrische Analyse) bestimmt, wobei die Probe mit 5°C/min aufgeheizt und die Abnahme des Probengewichts aufgenommen wurde (RT bis 450°C).

Mn/Mw wurde mittels GPC, Standard: Ultraform® N 2320 bestimmt

| Bsp | Abbruchmittel | Mn, Mw | Temperatur [°C] bei Gewichtsverlust von | | |
|---|---|---|---|---|---|
| | | | 30 % | 50 % | 70 % |
| 1 | Triacetondiamin 1 %ig in Wasser | 10.200,40.700 | 295,37 | 346,72 | 368,27 |
| 2 V | Triethylamin 1 %ig in Wasser | 13.500,47.400 | 271,82 | 313,89 | 347,54 |
| 3 V | Triethylphosphit 1 %ig in Wasser | 12.500, 46.700 | 286,37 | 319,54 | 356,46 |

| | | | | | |
|---|---|---|---|---|---|
| V = zum Vergleich | | | | | |

## Patentansprüche

1. Verfahren zur Herstellung von Polyoxymethylenen durch Polymerisation der Monomeren a) in Gegenwart kationisch wirkender Initiatoren b) sowie gegebenenfalls in Gegenwart von Reglern c) und anschließender Desaktivierung sowie Austragung aus dem Reaktor, **dadurch gekennzeichnet, dass** man als Desaktivator (d) mindestens eine basische Verbindung der allgemeinen Formel I einsetzt: 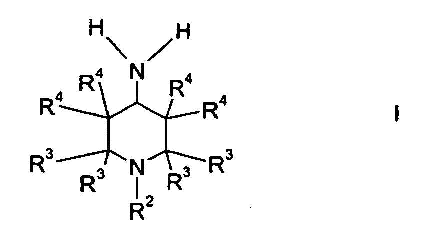 wobei R², R³ und R⁴ unabhängig voneinander Wasserstoff oder eine Methylgruppe bedeuten.

2. Verfahren nach Anspruch 1, **dadurch gekennzeichnet, dass** man als Desaktivator d) 4-Amino-2,2,6,6-Tetramethylpiperidin einsetzt.

3. Verfahren nach den Ansprüchen 1 oder 2, **dadurch gekennzeichnet, dass** man 0,001 bis 1000 Gew.-ppm Initiator b) einsetzt.

4. Verfahren nach den Ansprüchen 1 bis 3, **dadurch gekennzeichnet, dass** man 0,001 bis 500 Gew.-ppm Desaktivator d) einsetzt.

5. Verfahren nach den Ansprüchen 1 bis 4, **dadurch gekennzeichnet, dass** man den Desaktivator d) zu Initiator b) im Verhältnis 200:1 bis 0,1:1 einsetzt.

## Claims

1. A process for preparation of polyoxymethylenes via polymerization of the monomers a) in the presence of cationic initiators b) and also, if appropriate, in the presence of regulators c), followed by deactivation and discharge from the reactor, which comprises using, as deactivator (d), at least one basic compound of the general formula 1: 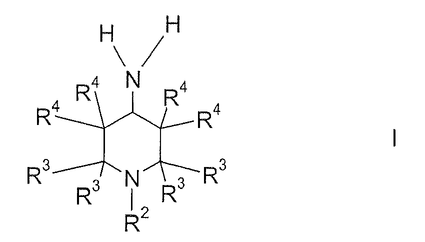 where R², R³ and R⁴, independently of one another, are hydrogen or a methyl group.

2. The process according to claim 1, which uses, as deactivator d), 4-amino-2,2,6,6-tetramethylpiperidine.

3. The process according to claim 1 or 2, which uses from 0.001 to 1000 ppm by weight of initiator b).

4. The process according to claims 1 to 3, which uses from 0.001 to 500 ppm by weight of deactivator d).

5. The process according to claims 1 to 4, which uses the deactivator d) in a ratio of from 200:1 to 0.1:1 to initiator b).

## Revendications

1. Procédé pour la préparation de polyoxyméthylènes par polymérisation des monomères a) en présence d'initiateurs à effet cationique b) ainsi que le cas échéant en présence d'agents de régulation c) et désactivation consécutive ainsi qu'évacuation du réacteur, **caractérisé en ce qu'**on utilise comme désactivateur (d) au moins un composé basique de formule générale I : 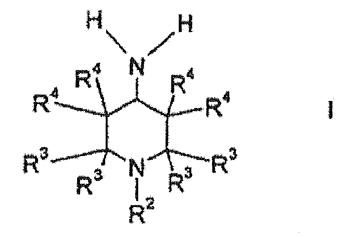 où R², R³ et R⁴ signifient, indépendamment l'un de l'autre, hydrogène ou un groupe méthyle.

2. Procédé selon la revendication 1, **caractérisé en ce qu'**on utilise comme dêsactivateur d) de la 4-amino-2,2,6,6-tétramêthylpipéridine.

3. Procédé selon les revendications 1 ou 2, **caractérisé en ce qu'**on utilise 0,001 à 1000 ppm en poids d'initiateur b).

4. Procédé selon les revendications 1 à 3, **caractérisé en ce qu'**on utilise 0,001 à 500 ppm en poids de désactivateur d).

5. Procédé selon les revendications 1 à 4, **caractérisé en ce qu'**on utilise le désactivateur d) et l'initiateur b) dans un rapport de 200:1 à 0,1:1.
